# EUROPEAN PATENT APPLICATION

(11) **EP 4 745 825 A1**
(43) Date of publication of application: **20.05.2026**
(21) Application number: 24212992.2
(22) Date of filing: 14.11.2024
(51) Int. Cl.: G06F 30/27, G01R 31/367, G01R 31/392, G06F 119/04, G06F 119/06, G06F 119/08

(54) **COMPUTER-IMPLEMENTED METHOD, COMPUTER SYSTEM, DATA MODELS, AND COMPUTER PROGRAM FOR SIMULATING DEGRADATION, AGEING, PERFORMANCE, AND/OR THERMAL BEHAVIOR OF AN ELECTRIC BATTERY**

(71) Applicant: Battery Sphere GmbH, 86845 Großaitingen (DE)
(72) Inventor: Lutz, Lukas, 86845 Grossaitingen (DE); Scherrer, Luca, 86845 Grossaitingen (DE); Alves dalla Corte, Daniel, 86845 Grossaitingen (DE); Principe, Victor, 86845 Grossaitingen (DE)
(74) Representative: Ziebig Hengelhaupt Intellectual Property Attorneys Patentanwaltskanzlei PartGmbB

(57) **Abstract**

The invention relates to a computer-implemented method (100) for simulating and predicting a degradation, ageing, performance, and/or thermal behavior of an electric battery, a method (200) for generating corresponding training datasets, and a computer system (44) for supporting users in different aspects of battery development, testing and validation. This battery domain specific artificial intelligence system (Battery AI System) applies raw data preparation steps like segmenting (130), timestamp data extraction (140) and formatting (150), as well as cross-linking (160) battery metadata, and uses transformer-based machine-learning models (20) and multilayer perceptrons (MLP Mixer) principles for accurate simulation results and shortened battery development cycles. A separate large language model (user LLM, 32), trained with domain specific language, controls a multi-agent system (33) with multiple distributed agents (34, 22) supporting user-friendly interaction between battery developers (10) and the Battery AI System (44).

## Description

### Field of the invention

The invention relates to a computer-implemented method, a computer system, and a computer program for simulating and predicting degradation, ageing, performance, and/or thermal behavior of an electric battery. Furthermore, the invention relates to a method for generating training datasets for training a battery simulation model. The invention also relates to a system comprising a simulation model for electric batteries and a large language model for user interaction.

### Background of the invention

Currently, the development of advanced battery technologies is a costly and time-consuming process. One challenge that battery developers are facing is the complexity of their projects and the long duration of development processes. For example, at automotive manufacturers, a battery typically undergoes multiple validation cycles for 1 to 2 years at a supplier level and additional 2 to 4 years in application. Typical costs are in the range of several million euros per cell type. Classic tasks that development teams perform are testing and simulating battery behavior under different conditions, material selections, testing, prototype designing using various chemistries, battery pack design and integration, testing, validation as well as data analysis and interpretation. Additionally, regulatory compliance must be ensured while keeping costs within acceptable limits.

A particular challenge in battery development and testing is the volume and complexity of test data and their processing and analysis. For example, for one battery cell, several gigabytes of data are generated during tests and validation which need to be analyzed, whereby these steps require significant time and computing resources. Prior art solutions tried to shorten development times with comprehensive data analysis methods. For example, US20230176131A1 discloses a method of simulating a battery pack using an equivalent circuit model (ECM) for determining battery pack current values and battery pack voltage values.

However, due to the complex dependencies within the different life-cycle stages of a battery as well as due to the large amounts of data, current methods and models fail to efficiently and accurately predict battery ageing, degradation, and performance across different chemistries and multiple use cases. Furthermore, engineers struggle with handling the complexity of traditional software tools which require specialized training and experience. In particular, due to increased competition in the market of electric vehicles, there is a need for a robust, efficient, user-friendly, and versatile simulation method and corresponding data models that can achieve the desired accuracy and efficiency improvements of the simulation processes in battery development projects.

### Disclosure of the invention

It can be seen as an object of the invention to provide an improved method, data models, and a system which provide improved accuracy, user-friendly interaction and better processing efficiency of battery simulations to predict ageing, degradation, thermal behavior and/or performance. The object is solved by the subject-matter of the independent claims. Advantageous further developments are disclosed in the dependent claims.

Disclosed is a computer-implemented method for simulating and/or predicting degradation, ageing, performance, and/or thermal behavior of an electric battery. An "electric battery" refers to any type of rechargeable or non-rechargeable electrochemical device that stores energy in the form of chemical energy, which is converted into electrical energy when discharged. This can include battery cells, battery modules, or battery packs. The term "ageing" describes the gradual deterioration of a battery's performance over time due to natural processes such as oxidation and degradation of materials. The term "thermal behavior" refers to how a battery responds to changes in temperature and generates heat during charging, discharging, or idle periods. The disclosed method can also refer to a simulation and/or prediction of drastic events like sudden self-discharge or thermal runway.

A trained simulation machine-learning model, which is a type of algorithm that enables prediction based on patterns learned from historical data, is provided to a simulation unit with a simulation model. A "simulation unit" refers to a software and/or hardware component that runs simulations based on input data and models. The simulation unit is responsible for executing the trained machine-learning model for generating output predictions. A simulation unit can be thought of as a virtual test environment where experiments are conducted using simulated data instead of real-world measurements. This allows developers testing hypotheses, explore multiple use cases, and predict outcomes without the need for physical experimentation or costly field trials.

This simulation model comprises a transformer architecture. The transformer architecture is adapted to process time series data and simulate temporal physical and chemical behavior of an electric battery. A transformer architecture is based on self-attention mechanisms that allow for modelling complex relationships between different parts of an input sequence without relying on recurrent neural networks (RNNs) or convolutional neural networks (CNNs). The transformer uses self-attention mechanisms to attend to different parts of the input sequence and weigh their importance. The model can comprise an encoder that processes the input sequence and a decoder that generates the output sequence. The transformer can use multiple attention heads, which allows it to capture complex relationships between different parts of the input sequence.

The transformer architecture and/or the simulation model are adapted to process time series data. "Time series data" refers to a sequence of measurements or observations taken at regular intervals over time. This type of data is used to monitor and analyze various aspects of battery performance, such as voltage, current, temperature, or capacity. For example, time series data refer to a sequence of measurements taken from electric batteries during various tests, such as cycle life testing, measuring voltage, current, and capacity over multiple charge-discharge cycles. Also, calendar ageing testing of monitoring battery performance over a prolonged period without cycling (e.g. for storage applications) and thermal stress testing, meaning exposing the battery to different temperatures or thermal gradients, are considered.

A "simulation" refers to a process that generates hypothetical or artificial data that mimics real-world behavior. In other words, simulation is used to create synthetic data that follows similar patterns and trends as actual data considering specific simulation parameters. An input dataset, which includes time series battery data, is received by a preprocessing unit. A preprocessing unit is a component that cleans, transforms, and prepares raw input data for use in modeling or analysis. The goal of preprocessing can be to transform the raw data into a format that can be effectively used by the simulation model. A typical preprocessing unit in machine-learning and data analysis context typically includes functions like data ingestion, data cleaning, outlier detection and removal, data transformation, numerical scaling and normalization, feature engineering, text preprocessing, data validation, type checking, and range checks.

The input dataset is then segmented by the preprocessing unit into input dataset segments, each segment being related to a specific battery test method and/or battery test parameter set. Examples of such tests include cycle life testing, which measures how many charge-discharge cycles a battery can withstand before its capacity degrades. Calendar ageing tests simulate real-world usage patterns to evaluate how batteries age over time without cycling, such as when they are stored for long periods. Thermal stress testing exposes batteries to various temperatures and thermal gradients to assess their performance under different conditions. High-temperature cycling simulates hot climates by cycling a battery at high temperatures to evaluate its lifespan. Low-temperature cycling simulates cold weather by cycling a battery at low temperatures to evaluate its performance in extreme environments.

According to an example, segmenting is based on PatchTST and/or CrossFormer. PatchTST is a type of Transformer-based model that is specifically designed for time series forecasting tasks. The "Patching" part refers to the way it processes input data, which involves dividing the time series into smaller patches or segments and then applying attention mechanisms to capture local semantic information. In other words, PatchTST is a variant of the traditional transformer architecture that is tailored for handling sequential data with temporal dependencies. An advantage can be to improve long-term forecasting accuracy by capturing complex patterns and relationships within the input time series.

Crossformer is a type of transformer-based model that is designed to handle cross-modal data, where different modalities (e.g., text, images, audio) are combined and processed together. Crossformer introduces a new attention mechanism that allows for cross-modality interactions. This enables the model to learn representations that are shared across multiple modalities and can leverage information from one modality to inform predictions in another. In essence, Crossformer is advantageous when handling complex relationships between different types of data (e.g., text, images, audio) and making more accurate predictions by leveraging these cross-modal interactions.

A parameter set can refer to a specific combination of test parameters that are used to evaluate the performance and reliability of a battery, comprising temperature at which the battery is tested, voltage level at which the battery is charged or discharged, current flow rate through the battery during testing and/or cycle count meaning the number of charge-discharge cycles that the battery has undergone before testing.

Unique timestamp data in the input dataset segments and/or input datasets are identified by a timestamp identification unit of the simulation unit using a machine-learning model of the timestamp identification unit which was trained with training timestamp data. Unique timestamp data can refer to a set of distinct and non-repeating values that represent the exact moment in time when a specific event or measurement was taken. For that purpose, typical pattern in the input data segments which describe timestamp data are identified and can be labelled as such. In an example, a machine-learning model is based on supervised learning algorithms like Random Forest, Gradient Boosting, or Support Vector Machines (SVMs) or unsupervised learning algorithms like K-Means clustering or Hierarchical Clustering. In another example, feature extraction is performed using relevant features from the input data segments, such as timestamp values (start and end times), data type (numeric or categorical) and/or segment length.

The identified timestamp data is then converted to a common format by the preprocessing unit, wherein the converted timestamps are unique for each time series. Timestamp data in input data or input data segments may comprise different formatting, for example, due to different data sources. Maintaining uniqueness of each time series data point, a common format is applied to all identified timestamp data in the input dataset segments to allow seamless processing in subsequent stages. The simulation unit combines battery meta-data, including cell chemistry meta-data or capacity meta-data, with input dataset segments. In other words, input dataset segments are augmented with additional metadata information which allows for a more precise prediction and analysis. The consideration of battery metadata considers dependencies between battery meta-data and the input dataset in the simulation. The augmented and preprocessed input dataset segments are provided to the simulation unit with the trained simulation model.

In a next step, an output dataset is generated, by the simulation unit with the simulation model, based on the input dataset segments. Multilayer perceptrons (MLP) mixer is applied which refers to a type of artificial neural network architecture that combines multiple layers of interconnected nodes (neurons) to process input data. Each layer applies an activation function to the output from the previous layer, allowing the model to learn complex patterns from the input dataset segments. Performance indicators can comprise KPIs like Mean Absolute Error (MAE) measuring an average difference between predicted and actual values, Root Mean Squared Percentage Error (RMSPE) measuring an average percentage error between predicted and actual values, or Coefficient of Determination (R-squared) measuring a quality of the model explaining the variation in the data. Performance indicators can refer to an accuracy and reliability of the simulation results, enabling users to evaluate the effectiveness of different battery ageing models and optimize their design for improved performance.

According to an embodiment of the invention, a battery test method comprises a reference performance test (RPT), and/or duty cycling test. In the context of battery ageing simulation, a Reference Performance Test (RPT) can provide a standardized way to evaluate the accuracy and reliability of different simulation models, allowing developers to compare results and identify areas for improvement. A Duty Cycling Test can be seen as a type of battery testing that simulates the real-world usage patterns of batteries in various applications. It involves cycling the battery between different states, such as charge and discharge, to evaluate its performance under repeated use.

According to an embodiment of the invention, the step of combining the input dataset segments with battery metadata comprises a correlation analysis, regression analysis, clustering analysis, neural networks, deep learning and/or time series forecasting method. Correlation Analysis identifies relationships between variables, helping to understand how they interact and influence each other. It is easy to implement and provides insights into variable associations. Regression Analysis predicts continuous outcomes based on one or more predictor variables. It can be useful for modeling complex relationships, helps identify causal links.

Clustering Analysis groups similar data points together based on their characteristics and can reveal hidden patterns and structures in the data. This can be useful for identifying anomalies and outliers. Neural Networks are a type of machine-learning algorithm that can learn from data to make predictions or classify inputs. They can handle complex relationships between variables which are advantageous for modeling non-linear interactions. Deep Learning refers to a subfield of neural networks that uses multiple layers to analyze data. The advantages are that they are suitable for image and speech recognition tasks, as they can automatically extract features from data. Time Series Forecasting predicts future values in a time series based on past patterns for predicting continuous outcomes.

In an embodiment of the invention, the method further comprises the step of fine-tuning, by the simulation unit, the output dataset by applying a physico-chemical model (PCM), particularly an Equivalent Circuit Model (ECM), the physico-chemical model being adapted for describing a physical and/or chemical behavior of the battery. In other words, the generated output dataset is undergoing an additional adjustment applying traditional prediction models and methods combining advantages of both worlds. A Physico-Chemical Model (PCM) is, in general, a mathematical representation of the physical and chemical processes that occur within a system. In the context of battery modeling, an Equivalent Circuit Model (ECM) is a type of PCM that represents the electrical behavior of a battery using a network of resistors, capacitors, and inductors.

An ECM models the internal dynamics of a battery by dividing it into smaller components, such as electrodes represented by resistance-capacitance networks, interfacial layers modeled with RC circuits or transmission lines, and electrolyte simulated using diffusion equations. This approach provides a deeper understanding of the underlying physical and chemical processes, allowing for more accurate predictions. The advantages of an ECM are that it offers physical insight into the battery's behavior, making it easier to understand how changes affect performance. Overall, equivalent circuit models offer a more physically grounded approach for battery modeling, providing valuable insights into the underlying mechanisms driving battery behavior. The combination of statistical methods like machine-learning and PCM based approaches can provide much better accuracy and performance gains.

According to an embodiment of the invention, the transformer architecture is based on an informer model, an autoformer model, a pyraformer model and/or a FEDformer model. These transformer-based models can offer advantages in terms of performance, interpretability, and computational efficiency. The Informer model leverages self-attention mechanisms to focus on relevant parts of the input sequence, allowing it to effectively capture complex patterns in battery time series data. AutoFormer Models incorporate an autoencoder into the transformer architecture and can learn a compact representation of the input data, reducing dimensionality and improving forecasting accuracy. Pyraformer Models utilize pyramid attention mechanisms to selectively focus on different scales of information within the input sequence.

Pyraformers are particularly effective in capturing long-range dependencies and handling irregularly sampled time series data. In terms of performance, these transformer-based models have been shown to outperform traditional recurrent neural network (RNN) architectures for battery time series forecasting tasks. Additionally, they offer improved interpretability due to their ability to visualize attention weights and understand how the model is processing sequential information. The FEDformer Model combines the benefits of Informer and AutoFormer by incorporating both self-attention mechanisms and autoencoder-based dimensionality reduction. FEDformers achieve state-of-the-art performance on various battery time series forecasting tasks, while also providing improved interpretability through attention visualization.

In an aspect of the invention, a computer-implemented method for generating a training dataset for training a transformer-based machine-learning simulation model adapted to simulate ageing, degradation, performance and/or thermal behavior of an electric battery is disclosed. A training dataset for a machine-learning simulation model can be a collection of data used to train the model, allowing it to learn patterns and relationships within the data. The training dataset typically consists of input features (predictor variables) and corresponding output values or labels that the simulation model aims to predict. The simulation model to be trained is adapted to process battery related time series data.

The method comprises the following steps: providing a time series battery raw dataset adapted to describe electrical, physical, and/or chemical properties of a battery. In a next step, a segmenting raw data into raw dataset segments takes place wherein each segment is related to one specific battery test and/or a test parameter set. The terms battery test, battery test method and parameter set have been defined above. According to an example, different test types can also mean variations of a same test type. According to an example, the segmenting of raw datasets into raw dataset segments is based on dynamic filtering comprising adaptive thresholds and/or real time statistical analysis.

In a next step, unique timestamps in the raw dataset segments are identified with a machine-learning model trained with training timestamp data, and the timestamp is assigned to the corresponding time series data. Definitions of unique timestamps and details as well as examples of machine-learning models have been described above. In a next step, corresponding raw dataset segments are combined with battery metadata, in particular cell chemistry metadata or capacity metadata, for modelling dependencies between battery metadata and raw datasets in the simulation. For definition of the terms "battery metadata", "dependencies" etc. it is referred to the description above related to simulation method.

In an embodiment of the invention, the segmenting is performed by a trained machine-learning model trained with raw data of specific battery tests. The machine-learning model is adapted to determine a begin and an end of a raw dataset segment in a time series battery raw dataset. Segmenting raw data can refer to a process of identifying and isolating specific portions or "segments" within a time series dataset, such as battery performance data. This involves using machine-learning algorithms to determine the start and end points of each segment, effectively dividing the raw data into smaller, more manageable chunks.

In the context of battery raw datasets, segmenting can help identify distinct patterns or events in the data, such as changes in temperature, charge/discharge cycles, or other factors that may impact battery performance. By isolating these segments, developers can better understand how different conditions affect battery behavior and make more accurate predictions about its future performance. In other words, segmenting can be seen as a possibility to carve out meaningful subsets of data from the raw dataset, allowing for more targeted analysis. According to an example, segmentation algorithms can comprise unsupervised learning methods like K-Means Clustering, Hierarchical Clustering, DBSCAN (Density-Based Spatial Clustering of Applications with Noise), or supervised learning methods like Random Forests, Gradient Boosting Machines, or Support Vector Machines.

In an embodiment of the invention, the segmenting of raw datasets into raw dataset segments is based on detecting key data patterns or key events in the raw dataset, the key events comprising charging cycles or discharging cycles. The segmenting of raw battery performance data can involve identifying specific patterns or events that occur repeatedly throughout the dataset. These key events can be thought of as markers in the data, signaling important changes or trends. In an example, if analyzing charging cycles for an electric vehicle battery, a key event is given when the battery reaches its maximum capacity (e.g., 80% charged). This could trigger a new segment in our dataset, indicating that the battery is now entering a different phase of charge/discharge behavior. Similarly, discharging cycles can also have distinct patterns or events. The generated segments can be analyzed separately applying specific dedicated analysis.

According to an embodiment of the invention, the segmenting of raw datasets into raw dataset segments comprises generating a unified feature vector for training the transformer-based machine-learning simulation model. A unified feature vector is a single representation that combines multiple features or attributes from different segments of a dataset into a compact and meaningful format. This allows for efficient processing and analysis by machine-learning models, enabling them to learn patterns and relationships between these features and make predictions about future behavior. In other words, a single, comprehensive representation of the data is created that can be used to train a transformer-based machine-learning model.

The unified feature vector can be seen as a 'super-profile' that captures all the essential information from each segment of the dataset. For instance, for analyzing charging cycles for an electric vehicle battery, a unified feature vector can include features such as average charge rate, maximum capacity reached, time spent in different charge/discharge states (e.g., 'fast-charging', 'slow-discharging'), or temperature readings during the cycle. These features are then combined into a single, compact representation that can be provided to the transformer-based model. This can allow the model to learn patterns and relationships between these features and make predictions about future battery performance. In an example, the unified feature vector is a summary of each segment's key characteristics enabling the machine-learning model to understand the underlying structure of the data.

In an aspect of the invention, a machine-learning large language model (user LLM) for interacting with a human user is provided. A large language model for user interaction is a type of artificial intelligence (Al) system that utilizes natural language processing (NLP) and machine-learning techniques to enable human-computer interactions through conversational interfaces. In one embodiment, the large language model may be implemented as a neural network-based architecture comprising a self-attention mechanism to analyze user input, a contextualized embedding layer to generate semantic representations of the input text, and a response generation module that utilizes attention mechanisms and contextualized embeddings to produce human-like responses.

The user LLM can, according to an example, further include additional features such as sentiment analysis, personalization techniques, emotional intelligence capabilities, and integration with external knowledge bases or databases to provide accurate and up-to-date information. The large language model for user interaction is a foundation LLM and trained on a battery domain specific language training dataset including battery-specific terms, variables, formatting etc. allowing seamless interaction and communication with battery developers accessing specialized resources through simplified and effective human machine interfaces.

Furthermore, the user LLM comprises a multi-agent system and the agents of the multi-agent system are configured to perform simulation specific tasks with the simulation unit and the simulation model. The user LLM is adapted to control a distribution of simulation tasks to a plurality of agents and to process and/or consolidate the returned results of the agents. In other words, the user LLM incorporates a multi-agent system, comprising multiple autonomous entities called "agents" or "Al agents". Each agent is designed to execute simulation-specific tasks in conjunction with the simulation unit and model. In this context, the term "multi-agent system" refers to a type of artificial intelligence architecture that enables collaboration among multiple intelligent agents. These agents operate independently but work together towards common goals or objectives.

An "agent", in this sense, is an autonomous entity capable of perceiving its environment, reasoning about it, and taking actions based on that understanding. In the context of the user LLM, each agent is responsible for performing specific tasks within a simulation framework. The underlying thought behind this design is to enable the user LLM to efficiently manage complex simulations by distributing task assignments among multiple agents. This approach allows the system to control the distribution of simulation tasks allowing to allocate tasks to individual agents, ensuring that each agent has a manageable workload. Furthermore, it is capable of processing and consolidating results. As agents complete their assigned tasks, they return their findings to the user LLM, which then consolidates and processes these results.

By leveraging multi-agent systems, the user LLM can effectively handle complex simulations by improving scalability by distributing task assignments among multiple agents, the system can efficiently manage large-scale simulations. At the same time, flexibility can be enhanced, because agents can adapt to changing simulation conditions or scenarios, allowing for more realistic and dynamic simulations. Multiple agents working together, the user LLM can combine their findings to produce a more comprehensive understanding of the simulated environment, improving overall accuracy. According to an embodiment of the invention, the agents of the user LLM are adapted to execute scripts and/or functions.

The underlying thought is the ability of LLMs to interact with external systems, tools, or applications by executing specific instructions. This capability allows the LLMs to perform tasks that go beyond natural language processing, such as executing pre-defined scripts or functions, the agents of the user LLM can automate repetitive or time-consuming tasks, freeing up human resources for more complex and creative work. The ability to call external systems enables seamless integration with various tools, applications, and services, allowing users to leverage the strengths of each system while maintaining a unified workflow.

In one aspect of the invention, a computer system for interacting with a user and simulating a degradation, ageing, performance and/or thermal behavior of an electric battery is disclosed. The system comprises a simulation unit with a preprocessing unit, the simulation unit being adapted for simulating ageing, degradation, performance and/or thermal behavior of an electric battery, comprising a simulation model, the simulation unit and preprocessing unit being adapted to perform the described simulation method and uses the training data generation method as described. Also, a user interface unit is disclosed comprising a user Large Language Model (user LLM) as described above, configured for interfacing with a human user.

The simulation unit, comprising the preprocessing unit and simulation model, is optimized for simulating complex battery behaviors. This module leverages training data generation methods to perform simulations that mimic real-world scenarios. Concurrently, the user LLM, integrated into the system's interface component, enables seamless interaction with users through natural language processing capabilities. Underlying thought can be described as follows: The two-model architecture combines a user interface portion (user LLM) and a simulation portion (simulation model and preprocessing unit), each specialized for different tasks. This design allows the system to excel in both human-computer interaction and complex battery behavior simulations.

The user LLM is designed to facilitate natural language interactions with users, providing an intuitive interface for querying or controlling the simulation. The simulation model focuses on simulating various aspects of electric battery behavior, such as ageing, degradation, performance, and thermal characteristics. This module leverages training data generation methods to perform simulations that mimic real-world scenarios. By separating these tasks into distinct models, the system can efficiently handle complex computations required for battery simulations while also providing a user-friendly interface for human interaction.

### BRIEF DESCRIPTION OF THE DRAWINGS

In the following, the invention is explained by means of an embodiment and the figures.
Fig. 1 exhibits tasks of a battery development process.
Fig. 2 shows a battery development and validation process with different samples.
Fig. 3 shows a simulation arrangement according to the invention with an input dataset, a simulation unit and an output dataset.
Fig. 4 shows a method for simulating and/or predicting degradation, ageing, performance, and/or thermal behavior of an electric battery according to the invention.
Fig. 5 shows a computer system for user interaction and simulation according to the invention.
Fig. 6 shows a method for generating training datasets, according to the invention, for training a transformer-based simulation model.
Fig. 7 shows three steps of a raw data preparation according to the invention.

The reference symbols used in the drawings, and their meanings, are listed in summary form in the list of reference symbols. In principle, identical parts are provided with the same reference symbols in the figures.

### DETAILED DESCRIPTION OF THE DRAWINGS

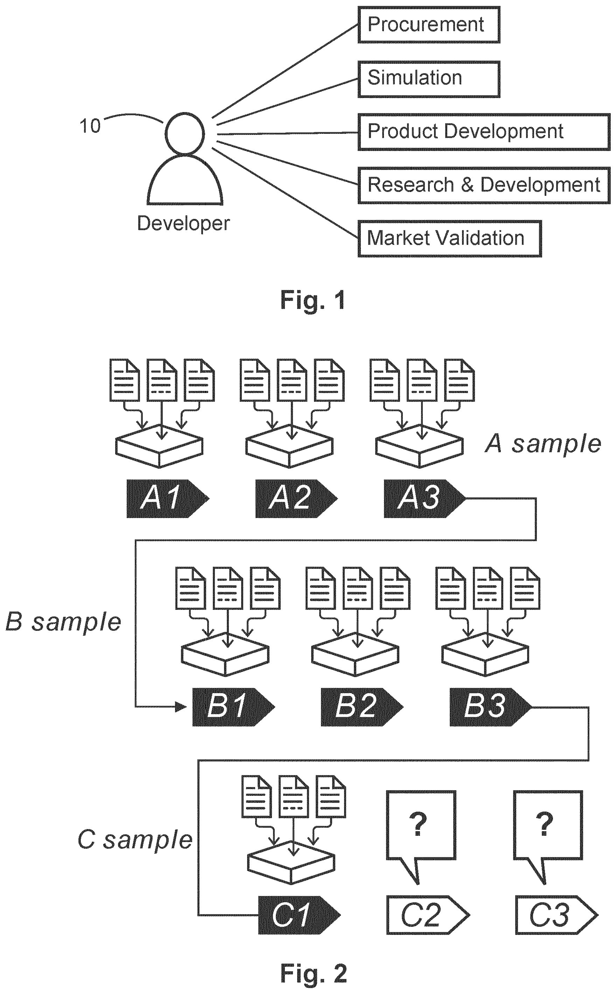

Fig. 1 describes typical aspects and tasks of a battery developer 10 which the current invention addresses. Firstly, new materials and suppliers emerge and need to be considered in valuations and designs. New applications and developments and technologies require new types of batteries with different performances and designs. Developers 10 also need to perform a minimum number of simulation cycles to accurately forecast a state of health (SOH) after a defined number of charging and discharging cycles.

At the same time, simulation requires comprehensive technical and time resources and must be balanced with the associated cost. In product development, a typical challenge is to identify quality issues in batches and identify possible implications for battery cell production. Given the vast amount of test data, battery developers 10 are expected to present, plot, analyze data, extract relevant information and present this for decision-making. Finally, battery developers 10 need to cross-check their ideas and results with existing market information, for instance patents and research papers. This complexity of the development process leads to lengthy and costly validation processes.

Fig. 2 shows a simplified battery development and validation process. A first A sample generates findings, in particular battery test data, which lead to an adjustment of parameters and updated cell design. Based on that, a B sample is tested and validated. This concept of designing, testing and validating is repeated over several steps. In an example, a cell chemistry with anode, cathode and electrolytes along with a first manufacturing concept leads to a first cell production (A sample). A battery pack concept design with detailed electrical, thermal, safety and control features provides a basis for a following B sample. Based on that, a battery pack is engineered providing a base for pack manufacturing (C sample). For each process step, all available quality decisions, all test data, and all cell chemistry and design specifications are considered as input variables.

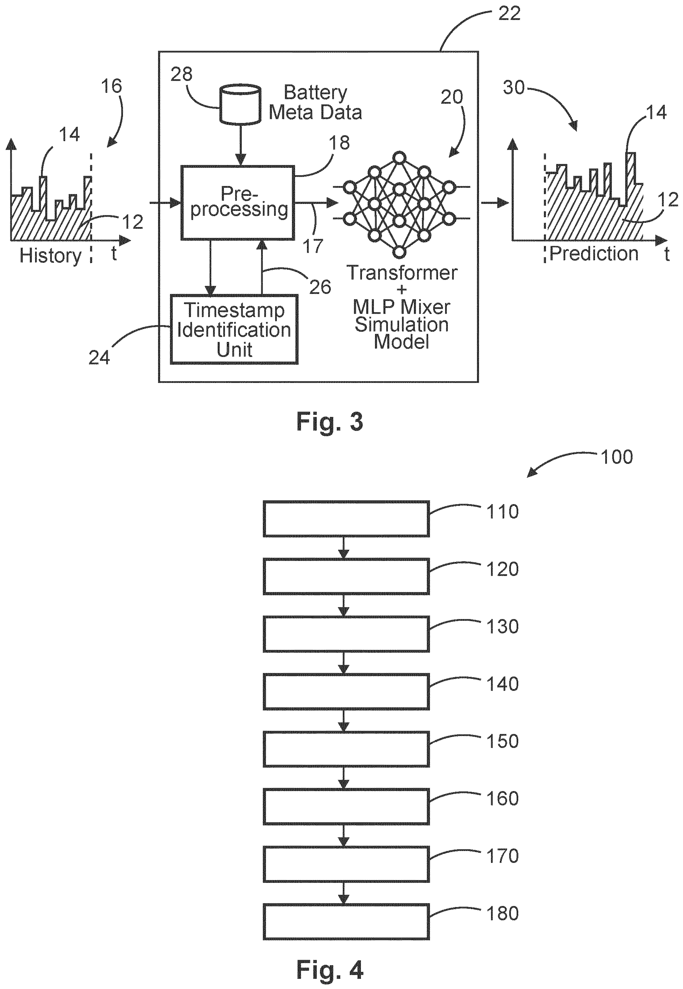

In Fig. 3, processing time series data for simulating future behavior of an electric battery is discussed. In battery testing, time series data refers to a sequence of measurements taken at regular intervals over time. These measurements 14 can include various parameters that describe the performance and behavior of a lithium-ion battery or other types of batteries like voltage, current, temperature, capacity or power. History time series data 12 with the corresponding discrete measurements 14 constitute an input dataset 16. This input dataset 16 is provided to a preprocessing unit 18 which is part of a simulation unit 22. This preprocessing unit 18 is configured to segment the input dataset 16 into input dataset segments, each segment of the input dataset 16 being related to a specific battery test method and/or battery test parameter set.

For identifying unique timestamp data 26 in the input dataset segment, a timestamp identification unit 24 is provided which communicates with the preprocessing unit 18. The timestamp identification unit 24 comprises a machine-learning model trained with training timestamp data. The preprocessing unit 18 converts the identified timestamp data 26 to a common format wherein the converted timestamps are unique for each input time series dataset 16. The preprocessing unit 18 combines the input dataset 16 segments with battery metadata 28, for instance, cell chemistry metadata and/or capacity metadata for considering dependencies between battery metadata 28 and the input dataset for a following simulation step.

The simulation unit 22 furthermore comprises a trained machine-learning simulation model 20 which comprises a transformer architecture adapted to process time series data 12 and is furthermore adapted to simulate temporal physical and/or chemical behavior of an electric battery. Classic ML models for predicting time series data are, for example, Morai or TimeGPT. This means that the simulation model 20 of the simulation unit 22 generates an output dataset 30 based on the input dataset segments 17 applying multi-layer perceptrons (MLP) principles. The output dataset 30 comprises time series output data 12 with discrete simulated measurements 14.

In Fig. 4, a method for simulating and/or predicting a degradation, ageing, performance, and/or thermal behavior of an electric battery is described. In a step 110, a trained simulation machine-learning model is provided to a simulation unit 22 with a simulation model 20. The simulation model 20 comprises a transformer architecture which is adapted to process time series data 12 and is furthermore adapted to simulate temporal physical and/or chemical behavior of the electric battery. In a step 120, an input dataset 16 comprising time series data is received by a preprocessing unit 18. Step 130 relates to a segmenting of the input dataset 16 into input dataset segments 17, wherein each segment of the input dataset 16 is related to a specific battery test method and/or battery test parameter set.

In step 130, unique timestamp data 26 is identified, using a machine-learning model of the simulation unit, in particular of the timestamp identification unit 24, which is trained with training timestamp data, in the input dataset segments 17 and/or in the input dataset 16. In a subsequent step 150, the preprocessing unit 18 converts the identified timestamp data 26 of the input dataset segments 17 to a common format, wherein the converted timestamps are unique for each time series dataset 12. In step 160, the input dataset segments 17 are combined, using the preprocessing unit 18 of the simulation unit 22, with battery metadata 28.

The preprocessed input dataset segments 17 are, in a step 170, provided to the simulation model 20 of the simulation unit 22. Based on the provided input dataset segments 17, the simulation unit 22 with the simulation model 20 generates in step 180 and output dataset applying multilayer perceptrons mixer principles. The output dataset 30 comprises time series output data 12 and/or calculated performance indicators, both adapted for predicting an ageing, degradation, performance and/or thermal behavior of the battery. Examples for calculated performance indicators can be Cycle life, Depth of discharge (DOD), State of charge (SOC), Capacity retention, Energy density, Power density, Charging/discharging efficiency, Self-discharge rate, Internal resistance, or Calendar life. In an embodiment of the invention, an additional step of fine-tuning, by the simulation unit 22, the output dataset 30 is performed by applying a physico-chemical model (PCM), particularly an equivalent circuit model, the physico-chemical model being adapted for describing a physical and/or chemical behavior of the battery.

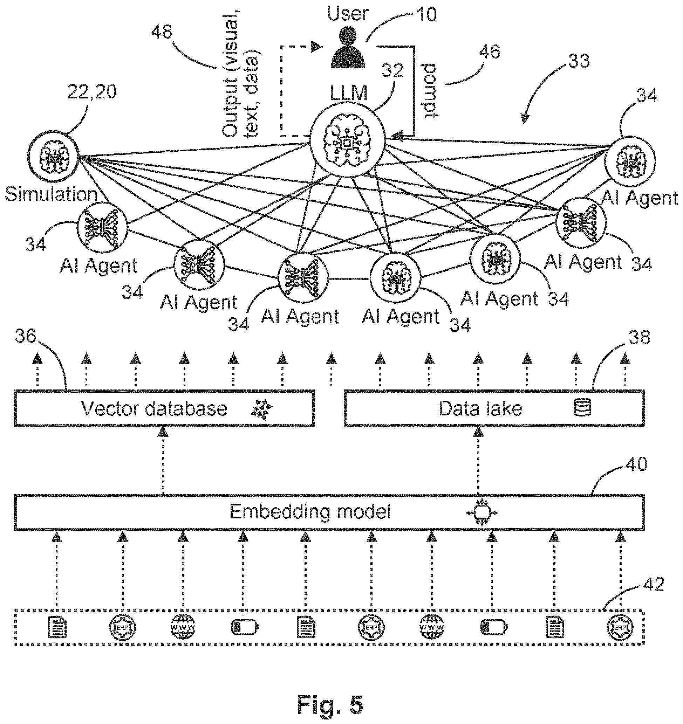

In Fig. 5, an embodiment of a computer system 44 for interacting with a user and simulating a degradation, ageing, performance and/or thermal behavior of an electric battery is shown. The computer system 44 comprises a multi-agent system 33, wherein the agents 34 of the multi-agent system are configured to perform simulation specific tasks with the simulation unit 22 and the simulation model 20. In other words, the computer system can be seen as an Al architecture supporting a battery development and validation process comprising specialized entities for specific tasks. For example, a battery developer (user) interacts with a user LLM 32, meaning a large language model designed for interacting with a human user. The user LLM 32 is a foundation LLM, like Llama, Mistral or Gemini, trained and fine-tuned with battery domain specific language training datasets. In other words, the user can use the terms used in the field of battery technology along with customized commands.

The user LLM 32 is configured to control a distribution of tasks, for example simulation tasks, to a plurality of agents 34 and to process and/or consolidate the returned results of the agents 34. The user LLM 32 is configured to control a simulation of battery behavior of an electric battery controlling a simulation unit 22 with a trained simulation model 20. For example, a user 10 prompts a user LLM 32 with a specific request 46 for simulating an ageing, degradation and performance of a specific battery cell type for 200 charging and discharging cycles. The user LLM 32 divides the request into specific subtasks and distributes them to a plurality of Al agents 34 including the simulation unit 22. The multi-agent system 33 consolidates the respective results generated by the Al agents 34 and produces a consolidated response 48 to the user. This can be visual, text or any other data formats which can be processed by the user.

For fine-tuning the user LLM and the simulation model, a variety of different data sources 42 are used. This can be documents, external databases, ERP systems, Internet sources, battery test data and other sources. These data sources are vector revised using embedding models like BERT or other suitable embedding models 40. The generated vectors are stored in a vector database 36 and/or a data lake 38 which can be used as databases for fine-tuning the simulation model 20 and/or the user LLM 32. The data lake 38 can be a data storage for battery data. Fine-tuning existing foundation models provide advantages because the required resources for training are limited to the fine-tuning to battery domain specific applications. In an example, the fine-tuning of the simulation model 20 and/or the user LLM comprises retrieval augmented generation techniques. This methodology provides the advantage that the models 20, 32 themselves will not need to be updated. Instead, the prompt is augmented with additional information, for instance using a document repository with domain specific knowledge.

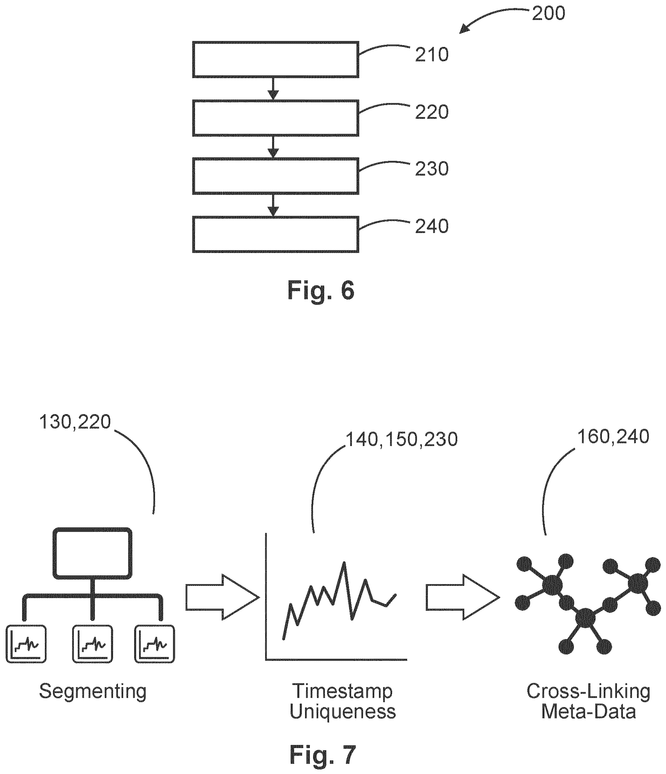

In Fig. 6, an example of a method for generating a training dataset 200 is disclosed. The purpose of the training datasets is for training a transformer-based machine-learning simulation model 20 which is adapted to simulate ageing, degradation, performance, and/or thermal behavior of an electric battery, and adapted to process battery related time series data 12. In step 210, a time series battery raw dataset is provided to a training dataset computing system. The training dataset computing system is adapted to generate training data by processing raw test data, for instance from battery testing cycles, the raw dataset being adapted to describe electrical, physical, and/or chemical properties of a battery. The purpose of the training datasets is to produce verified quality data to train a simulation model to predict future battery behavior with high accuracy.

In step 220, the raw datasets are segmented into raw dataset segments, wherein each segment is related to one specific battery test and/or a test parameter set. The segmenting allows for a distinction between different dataset types which are related to different tasks or aspects of a battery development and testing process. In step 230, unique timestamps are identified in the raw dataset segments using a machine-learning model trained with training timestamp data. The identified timestamps are assigned to the corresponding time series data points. In step 240, the corresponding raw dataset segments are combined with battery metadata, in particular cell chemistry metadata or capacity metadata for modelling dependencies between battery metadata and raw datasets for the simulation.

In Fig. 7, selected steps of the data preprocessing method of raw datasets including battery raw dataset and input dataset are shown. The segmenting step 130, 220 divides larger volumes of input data, including input datasets and raw datasets, into chunks or dataset segments which can be processed more efficiently and with higher accuracy. Also, raw datasets include multiple types of input data which are related to different test methods, test cycles or other criteria. In another aspect, accurate timestamp data are essential for further processing and sufficient accuracy of results. For instance, uniqueness of timestamps is achieved by removing duplicates or false data. The identification of timestamp data was described above, for example by using trained machine-learning models to detect timestamp data in unstructured input datasets. By cross-linking additional metadata of a battery cell to time series data, a simulation and prediction accuracy can be increased.

In this document, the terms "and", "or" and "either ... or" are used as conjunctions in a meaning similar to the logical conjunctions "AND", "OR" (often also "and/or") or "XOR", respectively. In particular, in contrast to "either ... or", the term "or" also includes occurrence of both operands ("and/or"). Method steps indicated in the description, or the claims, only serve an enumerative purpose of the method steps. They only imply a given sequence or an order where their sequence or order is explicitly expressed or is - obvious for the skilled person - mandatory due to their nature. In particular, the listing of method steps does not imply that this listing is exhaustive. Further steps may be interposed. Also, not all method steps described in an embodiment are required to implement the invention. The required method steps are defined by the claims. In the description and claims, the term "comprising" does not exclude existence or presence of other elements or steps. The indefinite article "a" or "an" does not exclude a plurality and must be understood as "at least one".

### LIST OF REFERENCE SIGNS

- 10: battery developer (user)
- 12: time series data (input / output)
- 14: discrete measurements
- 16: input dataset
- 17: input dataset segments
- 18: preprocessing unit
- 20: trained simulation model
- 22: simulation unit
- 24: timestamp identification unit
- 26: timestamp data
- 28: battery metadata
- 30: output dataset
- 32: user LLM
- 33: multi-agent system
- 34: AI agent
- 36: vector database
- 38: data lake
- 40: embedding model
- 42: battery data sources
- 44: computer system for interacting with a user and simulating battery behavior
- 46: user prompt
- 48: system output (visual, text, data)

- 100: method for simulating degradation, ageing, performance and/or thermal behavior of an electric battery
- 110: providing simulation model
- 120: receiving input dataset
- 130: segmenting into input dataset segments
- 140: identifying unique timestamp data
- 150: converting timestamp data
- 160: combining input dataset segments with battery metadata
- 170: providing input dataset segments to simulation unit
- 180: generating output dataset

- 200: method for generating a training dataset
- 210: providing time series raw datasets
- 220: segmenting raw data into raw dataset segments
- 230: identifying unique timestamps
- 240: combining corresponding raw dataset segments with battery metadata

## Claims

1. A computer-implemented method (100) for simulating and/or predicting a degradation, ageing, performance and/or thermal behavior of an electric battery comprising the steps:
- providing (110) a trained simulation machine-learning model (20) to a simulation unit (22), the simulation model (20) comprising a transformer architecture adapted to process time series data (12) and to simulate temporal physical and/or chemical behavior of the electric battery;
- receiving (120) an input dataset (16), by a preprocessing unit (18), comprising time series battery data (12);
- segmenting (130), by the preprocessing unit (18), the input dataset (16) into input dataset segments (17), each segment (17) of the input dataset (16) being related to a specific battery test method and/or battery test parameter set;
- identifying (140), by a timestamp identification unit (24) of the simulation unit (22), unique timestamp data (26) in the input dataset segments (17), by a machine-learning model of the timestamp identification unit (24), trained with training timestamp data;
- converting (150), by the preprocessing unit (18), identified timestamp data (26) in the input dataset segments (17) to a common format, wherein the converted timestamps (26) are unique for each time series dataset (12);
- combining (160), by the simulation unit (22), input dataset segments (17) with battery metadata (28), in particular cell chemistry metadata or capacity metadata, for including dependencies between battery metadata (28) and the input dataset (16) in the simulation (100);
- providing (170) the input datasets segments (17) to the simulation unit (22) with the simulation model (20);
- generating (180), based on the input dataset segments (17), by the simulation unit (22) and with simulation model (20), an output dataset (30) applying multi-layer perceptrons (MLP) mixer, the output dataset (30) comprising time series data (12) and/or calculated performance indicators, both adapted for simulating (100) and/or predicting an ageing, degradation, performance and/or thermal behavior of the battery.

2. Method (100) according to claim 1, wherein a battery test method comprises a reference performance test (RPT), and/or duty cycling test.

3. Method (100) according to any of the claims 1 to 2, wherein combining (160) the input dataset segments (17) with battery metadata (28) comprises a correlation analysis, regression analysis, clustering analysis, neural networks, deep learning and/or time series forecasting method.

4. Method (100) according to any of the claims 1 to 3, further comprising the step
- fine-tuning, by the simulation unit (22), the output dataset (30) by applying a physico-chemical model (PCM), particularly an equivalent circuit model, the physico-chemical model being adapted for describing a physical and/or chemical behavior of the battery.

5. Method (100) according to any of the claims 1 to 4, wherein the transformer architecture of the simulation model (20) is based on an informer model, an autoformer model, a pyraformer model and/or an FEDformer model.

6. A computer-implemented method (200) for generating a training dataset for training a transformer-based machine-learning simulation model (20) adapted for simulating (100) ageing, degradation, performance and/or thermal behavior of an electric battery, the simulation model (20) being adapted to process battery related time series data (12), the method (200) comprising the steps of:
- providing (210) a time series battery raw dataset to a training dataset computing system, the raw dataset being adapted to describe electrical, physical, and/or chemical properties of a battery;
- segmenting (220) raw dataset into raw dataset segments, each segment being related to one specific battery test and/or a test parameter set;
- identifying (230) unique timestamp data (26) in the raw dataset segments with a machine-learning model trained with training timestamp data (26), and assigning the timestamp data (26) to the corresponding time series datapoint.
- combining (240) corresponding raw dataset segments with battery metadata (28), in particular cell chemistry metadata or capacity metadata, for modelling dependencies between battery metadata and raw datasets.

7. Method (200) according to claim 6, wherein the segmenting (220) is performed by a trained machine-learning model trained with raw data of specific battery tests;
wherein the machine-learning model is adapted to determine a begin and an end of a raw dataset segment in a time series battery raw dataset.

8. Method (200) according to any of the claims 6 or 7, wherein the segmenting (220) of raw datasets into raw dataset segments is based on detecting key data patterns or key events in the raw dataset, the key events comprising charging cycles or discharging cycles.

9. Method (200) according to any of the claims 6 to 8, wherein the segmenting (220) of raw datasets into raw dataset segments comprises generating a unified feature vector for training the transformer-based machine-learning simulation model.

10. A machine-learning simulation model (20) for simulating degradation, ageing, performance and/or thermal behavior of an electric battery, comprising a transformer architecture;
wherein the simulation model (20) is adapted for use in the method according to any of the claims 1 to 5; and
wherein the simulation model (20) was trained with training datasets generated with the method according to any of the claims 6 to 9.

11. A machine-learning large language model (user LLM) (32) for interacting with a human user,
wherein the user LLM (32) is a foundation LLM trained with battery-domain specific language training datasets;
wherein the user LLM (32) comprises a multi-agent system (33);
wherein the agents (34) of the multi-agent system (33) are configured to perform simulation specific tasks with the simulation unit (22) and the simulation model (20);
wherein the user LLM (32) is adapted to control a distribution of simulation tasks to a plurality of agents (34) and to process and/or consolidate the returned results of the agents (34).

12. The large language model (user LLM) (32) according to claim 11, wherein the agents (34) of the user LLM are adapted to execute scripts and/or functions.

13. A computer system (44) for interacting with a user and simulating (100) a degradation, ageing, performance and/or thermal behavior of an electric battery, the system comprising:
- a simulation unit (22) with a preprocessing unit (18), the simulation unit (22) being adapted for simulating (100) ageing, degradation, performance and/or thermal behavior of an electric battery, comprising a simulation model (20) according to claim 10, the simulation unit (22) and preprocessing unit (18) being adapted to perform the method steps according to claim 1 to 5 and/or the training data generation method according to any of the claims 6 to 9;
- a user interface unit comprising a user Large Language Model (user LLM) (32) according to claim 11 or 12, configured for interfacing with a human user.

14. A computer program comprising instructions which, when the program is executed by a computer, cause the computer to carry out the method steps (100, 200) of any one of claims 1 to 9.

15. A computer-readable medium comprising instructions which, when executed by a computer, cause the computer to carry out the method (100, 200) of any one of claims 1 to 9 and/or comprising the models (32, 20) according to any of the claims 10 to 12.

## Amended claims

### Amended claims in accordance with Rule 137(2) EPC.

1. A computer-implemented method (100) for simulating and/or predicting a degradation, ageing, performance and/or thermal behavior of an electric battery comprising the steps:
- providing (110) a trained simulation machine-learning model (20) to a simulation unit (22), the simulation model (20) comprising a transformer architecture adapted to process time series data (12) and to simulate temporal physical and/or chemical behavior of the electric battery;
- receiving (120) an input dataset (16), by a preprocessing unit (18), comprising time series battery data (12);
- segmenting (130), by the preprocessing unit (18), the input dataset (16) into input dataset segments (17), each segment (17) of the input dataset (16) being related to a specific battery test method and/or battery test parameter set;
- identifying (140), by a timestamp identification unit (24) of the simulation unit (22), unique timestamp data (26) in the input dataset segments (17), by a machine-learning model of the timestamp identification unit (24), trained with training timestamp data;
- converting (150), by the preprocessing unit (18), identified timestamp data (26) in the input dataset segments (17) to a common format, wherein the converted timestamps (26) are unique for each time series dataset (12);
- combining (160), by the simulation unit (22), input dataset segments (17) with battery metadata (28) being cell chemistry metadata for including dependencies between battery metadata (28) and the input dataset (16) in the simulation (100);
- providing (170) the input datasets segments (17) to the simulation unit (22) with the simulation model (20);
- generating (180), based on the input dataset segments (17), by the simulation unit (22) and with simulation model (20), an output dataset (30) applying multi-layer perceptrons (MLP) mixer, the output dataset (30) comprising time series data (12) and/or calculated performance indicators, both adapted for simulating (100) and/or predicting an ageing, degradation, performance and/or thermal behavior of the battery.

2. Method (100) according to claim 1, wherein a battery test method comprises a reference performance test (RPT), and/or duty cycling test.

3. Method (100) according to any of the claims 1 to 2, wherein combining (160) the input dataset segments (17) with battery metadata (28) comprises a correlation analysis, regression analysis, clustering analysis, neural networks, deep learning and/or time series forecasting method.

4. Method (100) according to any of the claims 1 to 3, further comprising the step
- fine-tuning, by the simulation unit (22), the output dataset (30) by applying a physico-chemical model (PCM), particularly an equivalent circuit model, the physico-chemical model being adapted for describing a physical and/or chemical behavior of the battery.

5. Method (100) according to any of the claims 1 to 4, wherein the transformer architecture of the simulation model (20) is based on an informer model, an autoformer model, a pyraformer model and/or an FEDformer model.

6. A computer-implemented method (200) for generating a training dataset for training a transformer-based machine-learning simulation model (20) adapted for simulating (100) ageing, degradation, performance and/or thermal behavior of an electric battery, the simulation model (20) being adapted to process battery related time series data (12), the method (200) comprising the steps of:
- providing (210) a time series battery raw dataset to a training dataset computing system, the raw dataset being adapted to describe electrical, physical, and/or chemical properties of a battery;
- segmenting (220) raw dataset into raw dataset segments, each segment being related to one specific battery test and/or a test parameter set;
- identifying (230) unique timestamp data (26) in the raw dataset segments with a machine-learning model trained with training timestamp data (26), and assigning the timestamp data (26) to the corresponding time series datapoint.
- combining (240) corresponding raw dataset segments with battery metadata (28) being cell chemistry metadata for modelling dependencies between battery metadata and raw datasets.

7. Method (200) according to claim 6, wherein the segmenting (220) is performed by a trained machine-learning model trained with raw data of specific battery tests;
wherein the machine-learning model is adapted to determine a begin and an end of a raw dataset segment in a time series battery raw dataset.

8. Method (200) according to any of the claims 6 or 7, wherein the segmenting (220) of raw datasets into raw dataset segments is based on detecting key data patterns or key events in the raw dataset, the key events comprising charging cycles or discharging cycles.

9. Method (200) according to any of the claims 6 to 8, wherein the segmenting (220) of raw datasets into raw dataset segments comprises generating a unified feature vector for training the transformer-based machine-learning simulation model.

10. A simulation unit (22) provided with a trained simulation machine-learning model (20), the simulation model (20) comprising a transformer architecture adapted to process time series data (12) and to simulate temporal physical and/or chemical behavior of an electric battery; wherein the simulation unit (22) is configured to:
- combine (160) input dataset segments (17) with battery metadata (28) being cell chemistry metadata for including dependencies between battery metadata (28) and the input dataset (16) in the simulation (100), wherein the input datasets segments (17) is provided to the simulation unit (22) with the simulation model (20);
- generate (180), based on the input dataset segments (17), an output dataset (30) applying multi-layer perceptrons (MLP) mixer, the output dataset (30) comprising time series data (12) and/or calculated performance indicators, both adapted for simulating (100) and/or predicting an ageing, degradation, performance and/or thermal behavior of the battery.

11. A computer system (44) for interacting with a user and simulating (100) a degradation, ageing, performance and/or thermal behavior of an electric battery, the system comprising:
- a simulation unit (22) with a preprocessing unit (18), the simulation unit (22) being adapted for simulating (100) ageing, degradation, performance and/or thermal behavior of an electric battery, comprising a simulation model (20) according to claim 10, the simulation unit (22) and preprocessing unit (18) being adapted to perform the method steps according to claim 1 to 5 and/or the training data generation method according to any of the claims 6 to 9;
- a user interface unit comprising a user Large Language Model (user LLM) (32), configured for interfacing with a human user;
wherein the user LLM (32) is a foundation LLM trained with battery-domain specific language training datasets;
wherein the user LLM (32) comprises a multi-agent system (33); wherein the agents (34) of the multi-agent system (33) are configured to perform simulation specific tasks with the simulation unit (22) and the simulation model (20);
wherein the user LLM (32) is adapted to control a distribution of simulation tasks to a plurality of agents (34) and to process and/or consolidate the returned results of the agents (34)..

12. A computer program comprising instructions which, when the program is executed by a computer, cause the computer to carry out the method steps (100, 200) of any one of claims 1 to 9.

13. A computer-readable medium comprising instructions which, when executed by a computer, cause the computer to carry out the method (100, 200) of any one of claims 1 to 9.
